# FASCICULE DE BREVET EUROPEEN

(11) **EP 2 906 454 B1**
(45) Date de publication et mention de la délivrance du brevet: **02.01.2019**
(21) Numéro de dépôt: 13785517.7
(22) Date de dépôt: 01.10.2013
(51) Int. Cl.: B60W 50/14, B60L 3/10, B60L 11/14, B60L 15/20, B60W 10/06, B60W 10/08, B60W 10/26, B60L 11/18, B60K 6/26, B60W 20/50, B60W 20/40, F02N 11/08, F02N 11/10, F02D 41/22, B60W 50/02

(54) **PROCÉDÉ ET DISPOSITIF DE CONTROLE-COMMANDE DE DÉMARRAGE D'UN MOTEUR THERMIQUE D'UN VÉHICULE HYBRIDE**
VERFAHREN UND VORRICHTUNG ZUR ÜBERWACHUNG/STEUERUNG DES STARTS EINER BRENNKRAFTMASCHINE EINES HYBRIDFAHRZEUGS
METHOD AND DEVICE FOR MONITORING/CONTROLLING THE STARTING OF A HEAT ENGINE OF A HYBRID VEHICLE

(30) Priorité: 09.10.2012 FR 1259611
(43) Date de publication de la demande: 19.08.2015
(73) Titulaire: Renault S.A.S., 92100 Boulogne-Billancourt (FR)
(72) Inventeur: NGUYEN, Hoang-Giang, F-91130 Ris Orangis (FR); KETFI-CHERIF, Ahmed, F-78990 Elancourt (FR); DANG, Christophe, F-94800 Villejuif (FR); VAN-FRANK, Jean, F-92500 Rueil Malmaison (FR); LAURAIN, Emmanuel, F-94290 Villeneuve Le Roi (FR)
(86) Numéro de dépôt international: PCT/FR2013/052332
(87) Numéro de publication internationale: WO 2014/057189

(56) Documents cités:
- EP-A2- 2 292 459
- WO-A1-2005/085630
- DE-A1-102007 047 619
- US-A1- 2004 099 234
- US-A1- 2011 266 865

## Description

La présente invention concerne le domaine des procédés et des dispositifs de démarrage d'un moteur thermique utilisé dans un véhicule hybride.

Un procédé et un dispositif de contrôle commande de démarrage d'un moteur thermique tel que défini par le préambule de la revendication 1 ou par le préambule de la revendication 7 sont connu du document WO 2005/085630. Le véhicule hybride comporte un moteur thermique et au moins un moteur électrique situé sur le train avant ou le train arrière des roues. Par exemple, à titre illustratif, un moteur électrique peut être situé sur chaque roue arrière du véhicule hybride.

Le moteur électrique est généralement destiné à assurer l'entrainement du véhicule hybride dans les zones urbaines et le moteur thermique est généralement destiné à assurer l'entrainement du véhicule hybride hors des zones urbaines.

Le véhicule hybride peut être déplacé suivant différents modes de fonctionnement, encore nommés modes de motricité dans la littérature.

Un premier mode de fonctionnement dans lequel le ou les moteurs électriques servent à apporter l'intégralité de l'énergie nécessaire au déplacement du véhicule, un deuxième mode de fonctionnement dans lequel le moteur thermique seul sert à apporter l'intégralité de l'énergie nécessaire au déplacement du véhicule et un troisième mode de fonctionnement dans lequel le ou les moteurs électriques et le moteur thermique servent à apporter l'intégralité de l'énergie nécessaire au déplacement du véhicule.

Le véhicule hybride comporte une architecture électrique destinée à assurer le fonctionnement de ces différents modes de fonctionnement et à piloter le moteur thermique et le ou les moteurs électriques.

Des unités de contrôle électronique UCE pilotent notamment le fonctionnement d'un moteur thermique, d'un ou de plusieurs moteurs électriques et d'une boîte de vitesse robotisée (BVR) ou automatique (BVA) par l'intermédiaire de bus de multiplexage CAN en fonction de paramètres du véhicule.

Les unités de contrôle électronique UCE permettent la transmission des couples moteur vers les roues en mode propulsion et celle des couples freineur des roues vers le ou les moteurs électriques par des moyens de crabotage pour recharger les batteries du moteur électrique.

Les paramètres du véhicule pris en compte par les unités de contrôle électronique UCE sont mesurés par des capteurs et peuvent se rapporter au déplacement du véhicule.

Les paramètres du véhicule sont, par exemple, la vitesse du véhicule, l'angle de volant, la vitesse des roues, le système de freinage ABS ou ESP.

Un problème rencontré actuellement sur les véhicules hybrides concerne le démarrage du moteur thermique.

Le démarrage du moteur thermique est lié à l'état d'une batterie de démarrage, telle que la batterie de servitude 12V, qui alimente le démarreur ou l'alterno-démarreur.

Lorsque la batterie de démarrage est en mauvais état ou en court-circuit, elle ne délivre plus le courant nécessaire pour lancer le démarreur ou l'alterno-démarreur du moteur thermique.

Dans ce cas, le basculement entre le premier mode de fonctionnement et le deuxième mode de fonctionnement du véhicule hybride ne peut pas être réalisé.

En outre, la chute de la tension du réseau de bord en-dessous de 4.5V, que peut entraîner cet état de dysfonctionnement de la batterie, provoque une réinitialisation des unités de contrôle électronique UCE.

Cette réinitialisation des unités de contrôle électronique UCE peut entraîner la perte de la direction assistée électrique pilotée par ces unités de contrôle électronique UCE et donc la perte de contrôle du déplacement du véhicule hybride par le conducteur.

Pour faire face à ce problème, certains véhicules hybrides comportent une batterie de démarrage principale et une batterie de démarrage de remplacement, la batterie de démarrage principale étant remplacée en cas de dysfonctionnement, ce dispositif permettant de continuer à assurer le contrôle du déplacement du véhicule hybride.

Toutefois, cette solution utilise deux batteries de démarrage, ce qui est couteux et nécessite un volume additionnel à prévoir sur le véhicule pour la batterie de remplacement.

Dans ce contexte, la présente invention a pour but de proposer un procédé et un dispositif pour un véhicule hybride exempt de l'une au moins des limitations précédemment évoquée.

Le procédé de contrôle-commande de démarrage d'un moteur thermique d'un véhicule hybride comprenant au moins un moteur électrique, est remarquable é en ce qu'il présente des étapes consistant à :
- lancer une pseudo-séquence de démarrage du moteur thermique en utilisant une batterie de démarrage,
- mesurer et enregistrer une évolution temporelle d'au moins un paramètre de la batterie de démarrage, comprenant une intensité de courant et une tension données aux bornes de ladite batterie de démarrage,
- détecter si l'évolution temporelle du ou desdits paramètres atteint ou non une valeur prédéterminée définissant un état de la batterie de démarrage capacitaire ou non pour un démarrage du moteur thermique, pendant un intervalle de temps donné,

- si l'état capacitaire de la batterie de démarrage est détecté, démarrer le moteur thermique en utilisant la batterie de démarrage,
- si l'état capacitaire de la batterie de démarrage n'est pas détecté, autoriser le fonctionnement du moteur électrique pour le déplacement du véhicule hybride et prévenir le conducteur que l'état capacitaire de la batterie de démarrage n'est pas détecté.

Le lancement de la pseudo-séquence de démarrage est réalisé pendant le fonctionnement du moteur électrique du véhicule hybride.

Le lancement de la pseudo-séquence de démarrage est réalisé pendant l'arrêt du moteur électrique du véhicule hybride.

L'étape de détection de l'état capacitaire de la batterie de démarrage est réalisée durant une durée inférieure à 300ms.

L'état capacitaire de la batterie de démarrage est défini par une augmentation de l'intensité de courant de plusieurs centaines d'ampères et une chute de tension en deçà d'un à plusieurs volts pendant une durée comprise entre 100ms et 200ms.

L'état capacitaire de la batterie de démarrage est défini par une atteinte de l'intensité de courant d'au moins 800A, une chute de tension de moins de 3,8V à partir de 12.8V pendant une durée inférieure à 200 millisecondes.

L'invention concerne également aussi un dispositif de contrôle-commande de démarrage d'un moteur thermique d'un véhicule hybride comprenant un moteur thermique, au moins un moteur électrique, un moyen de démarrage du moteur thermique tel qu'un démarreur, une batterie de démarrage, pilotés par une unité de contrôle électronique principale, l'unité de contrôle électronique principale permettant de :
- lancer une pseudo-séquence de démarrage du moteur thermique par l'intermédiaire du moyen de démarrage alimenté par la batterie de démarrage,
- mesurer et enregistrer une évolution temporelle de d'au moins un paramètre de la batterie de démarrage, comprenant une intensité de courant et une tension données aux bornes de ladite batterie de démarrage,
- détecter si l'évolution temporelle du ou desdits paramètres atteint ou non une valeur prédéterminée définissant un état de la batterie de démarrage capacitaire ou non pour un démarrage du moteur thermique, pendant un intervalle de temps donné,
- si l'état capacitaire de la batterie de démarrage est détecté, démarrer le moteur thermique en utilisant la batterie de démarrage,
- si l'état capacitaire de la batterie de démarrage n'est pas détecté, autoriser le fonctionnement du moteur électrique pour le déplacement du véhicule hybride et prévenir le conducteur que l'état capacitaire de la batterie de démarrage n'est pas détecté.

Avantageusement, le dispositif de contrôle-commande comporte une boîte de vitesse robotisée (BVR) ou automatique (BVA).

L'unité de contrôle électronique principale permet le démarrage du moteur thermique suivi par un engagement de ladite boîte de vitesse si l'état capacitaire de la batterie de démarrage n'est pas détecté et que le véhicule est déplacé par le moteur électrique.

La batterie de démarrage est la batterie servitude 12V.

Le dispositif comporte un moyen de signalisation logé dans le véhicule, relié à l'unité de contrôle électronique principale et avertissant le conducteur du mode de fonctionnement du véhicule.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement l'architecture électrique d'un véhicule hybride selon l'invention ;
- les figures 2 et 3 représentent graphiquement les mêmes évolutions temporelles de la tension et du courant lors du démarrage du moteur thermique, avec deux échelles de temps différentes ;
- les figures 4 et 5 représentent schématiquement le procédé de démarrage d'un moteur thermique d'un véhicule hybride selon l'invention.

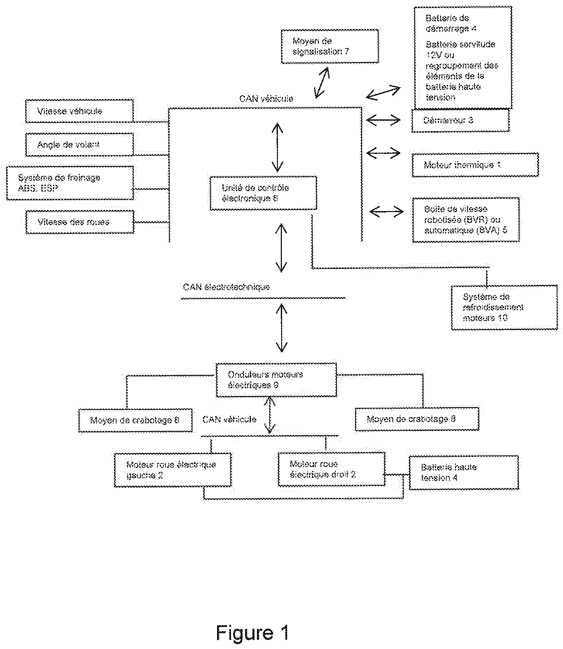

Comme représenté sur la figure 1, le dispositif permettant le démarrage d'un moteur thermique d'un véhicule hybride selon l'invention comporte : un moteur thermique 1, un ou plusieurs moteurs électriques 2, un moyen de démarrage 3 du moteur thermique 1 tel qu'un démarreur ou un alterno-démarreur, une batterie de démarrage 4, telle que la batterie servitude 12V ou un regroupement des éléments de la batterie haute tension des moteurs électriques pour obtenir du 12V, reliée au moyen de démarrage 3 et une boîte de vitesse robotisée 5BVR) ou automatique (BVA) 5.

Une unité de contrôle électronique UCE principale 6 (ou superviseur bi-mode) pilote le fonctionnement de ces éléments par l'intermédiaire de bus de multiplexage CAN et d'unités de contrôle électronique UCE du moteur thermique 1 et du ou des moteurs électriques 2.

Des moyens de crabotage 8 sont pilotés par des onduleurs de moteur électrique 9 commandés par l'unité de contrôle électronique principale 6.

L'unité de contrôle électronique principale 6 commande également un système de refroidissement des moteurs 10.

Un moyen de signalisation 7, tel qu'un moyen de signalisation visuel utilisant un écran et une interface homme-machine IHM, est logé dans le véhicule et relié à l'unité de contrôle électronique principale 6.

Il permet d'avertir le conducteur du mode de fonctionnement utilisé pour le déplacement du véhicule hybride.

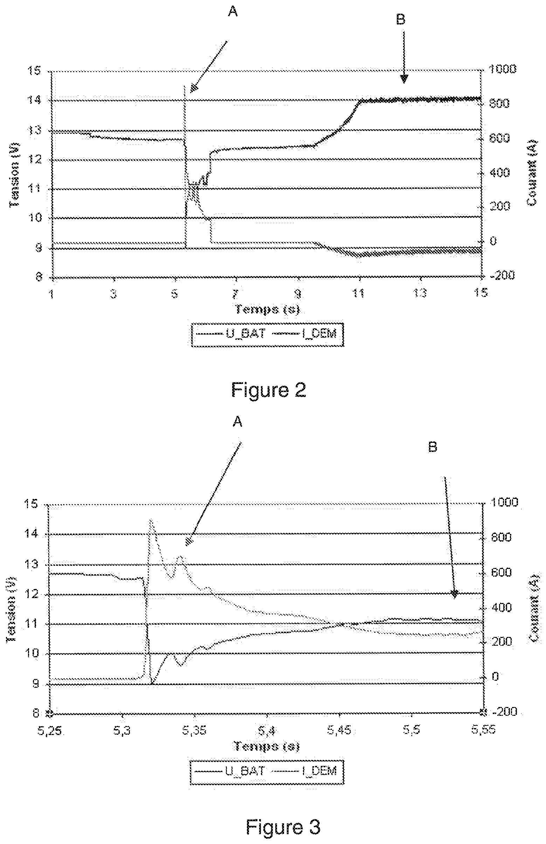

Les figures 2 et 3 représentent graphiquement les mêmes évolutions temporelles de la tension et du courant lors du démarrage du moteur thermique, avec deux échelles de temps différentes, l'échelle de temps étant plus grande sur la figure 3 que sur la figure 2.

Il est observé sur les courbes des figures 2 et 3, un appel de courant aux bornes de la batterie de démarrage 4 lors du démarrage du moteur thermique 1 du véhicule hybride.

Cet appel de courant se traduit, sur les figures 2 et 3, par une forte hausse de courant durant une durée t inférieure à 200 millisecondes, le courant passant, sur la courbe A des figures 2 et 3, de 0 à 800A, tandis que durant la même durée t, la tension chute, sur la courbe B, de 12.8V à 9V.

Cet appel de courant signifie que le moteur thermique 1 peut être démarré à partir du moyen de démarrage 3 alimenté par la batterie de démarrage 4. Dans ce cas, la batterie de démarrage 4 est dite capacitaire.

Ces intervalles de valeurs sont donnés à titre uniquement illustratif et dépendent du moteur thermique, du démarreur et de la batterie de démarrage utilisés.

Ainsi, l'invention permet la vérification, avant de réaliser le démarrage d'un moteur thermique d'un véhicule hybride, que durant une pseudo-séquence de démarrage d'une durée inférieure à quelques centaines de millisecondes, il est observé une hausse de courant de quelques centaines d'ampères et une chute de tension d'un à plusieurs volts.

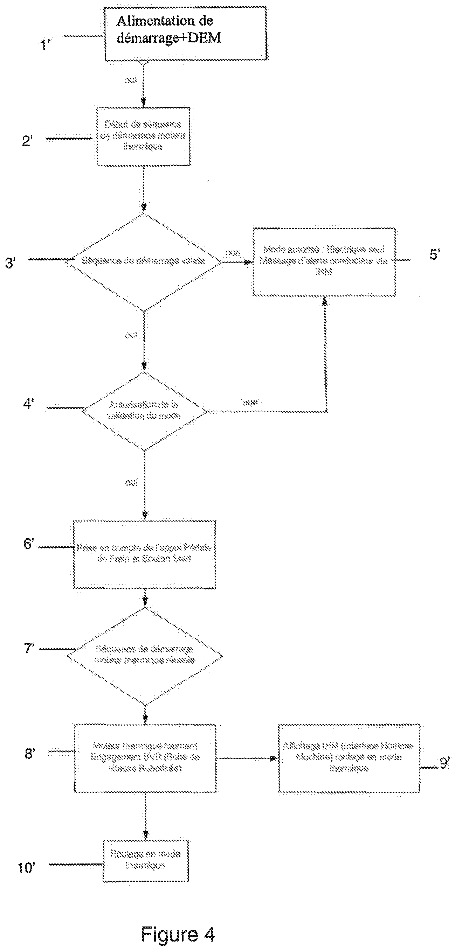

Comme illustré sur la figure 4, le conducteur déclenche le contact de démarrage du véhicule hybride dans une première étape 1', ce qui entraîne le lancement de la pseudo-séquence de démarrage du moteur thermique 1 par l'intermédiaire du moyen de démarrage 3 alimenté par la batterie de démarrage 2 dans une deuxième étape 2'.

Si l'appel de courant aux bornes de la batterie de démarrage 4 est détecté par l'unité de contrôle électronique principale 6 dans une troisième étape 3', alors la batterie de démarrage 4 est capacitaire et la séquence de démarrage est validée.

L'unité de contrôle électronique principale 6 autorise alors le mode de fonctionnement du véhicule hybride utilisant le moteur thermique 1 dans une quatrième étape 4'.

Dans le cas contraire, dans une étape 5', si l'appel de courant n'est pas détecté aux bornes de la batterie de démarrage 4, alors la batterie de démarrage 4 n'est pas capacitaire, l'unité de contrôle électronique principale 6 n'autorise pas le mode de fonctionnement du véhicule hybride utilisant le moteur thermique 1 et le déplacement du véhicule hybride est réalisé uniquement par le ou les moteurs électriques 2.

Le moyen de signalisation 7 envoie un message d'alerte au conducteur en indiquant que le moteur thermique 1 n'est pas utilisé. Le conducteur est ainsi prévenu que la batterie de démarrage 4 n'est pas capacitaire.

Dans une sixième étape 6', l'appui sur la pédale de frein et le bouton de démarrage « start » sont pris en compte.

Dans une septième étape 7', la séquence de démarrage du moteur thermique 1 est validée par l'unité de contrôle électronique principale 6.

Dans une huitième étape 8', le moteur thermique 1 est tournant et la boîte de vitesse robotisée 5 est engagée.

Dans une neuvième étape 9', le moyen de signalisation 7 indique au conducteur que le mode de fonctionnement avec le moteur thermique 1 est utilisé.

Dans une dixième étape 10', le véhicule hybride se déplace sous l'action du moteur thermique 1.

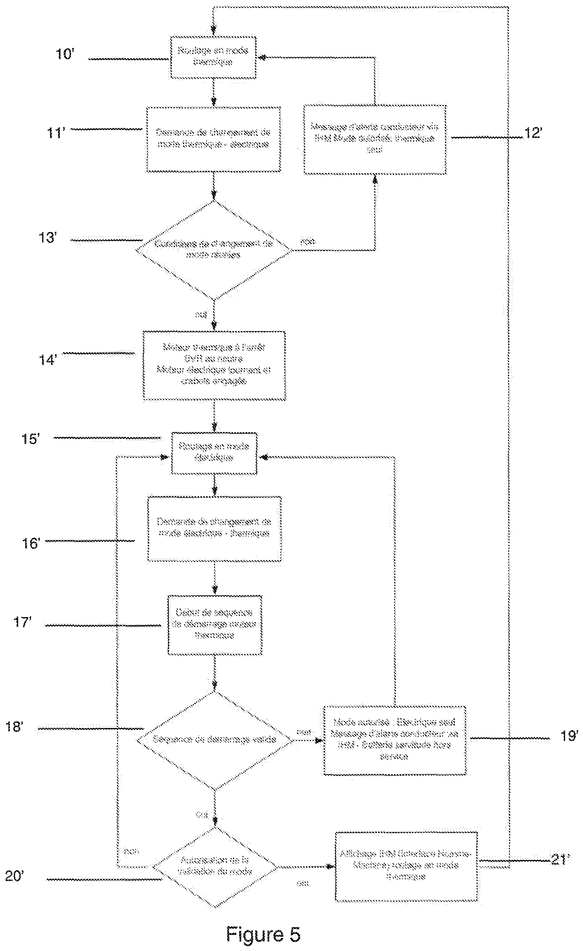

Le procédé selon l'invention est également illustré sur la figure 5 à partir du déplacement du véhicule hybride assuré par le fonctionnement du moteur thermique 1 et réalisé lors de la dixième étape 10'.

Dans une onzième étape 11', une demande de changement de mode est demandée par le conducteur pour basculer du moteur thermique 1 vers le ou les moteurs électriques 2.

Si les conditions de changement de mode sont réunies dans une treizième étape 13', alors l'unité de contrôle électronique principale 6 pilote et contrôle que le moteur thermique 1 est arrêté et que la boîte de vitesse est au point mort dans une quatorzième étape 14'. Le ou les moteurs électriques 2 sont tournants et les moyens de crabotage sont engagés.

Dans le cas contraire, si les conditions de changement de mode de fonctionnement ne sont pas réunies, le déplacement du véhicule hybride est réalisé uniquement par le moteur thermique 1 et le moyen de signalisation 7 indique au conducteur dans une douzième étape 12' que seul le moteur thermique 1 est autorisé pour le déplacement du véhicule.

Dans une quinzième étape 15', le déplacement du véhicule est réalisé par le ou les moteurs électriques.

Dans une seizième étape 16', une demande de changement du mode de fonctionnement utilisant le moteur électrique 2 vers le mode de fonctionnement utilisant le moteur thermique 1 est réalisée par le conducteur.

Dans une dix-septième étape 17', une pseudo-séquence de démarrage du moteur thermique 1 est lancée.

Dans une dix-huitième étape 18', l'unité de contrôlé électronique principale 6 mesure et enregistre l'état de la batterie de démarrage 4, et détecte si la batterie de démarrage 4 est capacitaire pour déterminer si la séquence de démarrage est valide.

Dans une dix-neuvième étape 19', l'unité de contrôlé électronique principale 6 envoie un message au moyen de signalisation 7 qui avertit le conducteur que seul le mode utilisant le moteur électrique 2 est autorisé car la batterie de démarrage n'est pas capacitaire.

Dans ce cas, le déplacement du véhicule hybride est assuré uniquement par le ou les moteurs électriques et le procédé revient à la quinzième étape 15'.

Dans une vingtième étape 20', la séquence de démarrage est validé par l'unité de contrôlé électronique principale 6.

Dans une vingt-unième étape 21', l'unité de contrôlé électronique principale 6 envoie un message au conducteur par le moyen de signalisation 7 qui avertit le conducteur que le déplacement du véhicule est réalisé en utilisant le moteur thermique 1.

Le déplacement du véhicule hybride est assuré uniquement par le moteur thermique 1 et le procédé selon l'invention revient à la dixième étape 10'.

Ainsi, la présente invention décrit un procédé et un dispositif qui permettent, par la mesure de l'état de la batterie de démarrage, de prévenir le conducteur de tout affaiblissement ou du non-fonctionnement de cette dernière, l'affaiblissement ou le non-fonctionnement de cette dernière pouvant entraîner le redémarrage des unités de contrôles électroniques qui pilotent le fonctionnement du moteur thermique et du ou des moteurs électriques assurant le déplacement du véhicule hybride, avec le risque d'une perte de contrôle par le conducteur du déplacement du véhicule hybride.

Dans une telle situation, le procédé selon l'invention permet d'autoriser le fonctionnement du ou des moteurs électriques et d'empêcher le démarrage du moteur thermique à l'aide de la batterie de démarrage soit à l'arrêt du véhicule soit pendant le déplacement du véhicule réalisé par le ou les moteurs électriques.

La mesure de la variation de l'état de la batterie de démarrage est réalisée durant une durée de l'ordre de quelques centaines de millisecondes. Elle n'est donc pas perceptible par le conducteur ni gênante dans la maîtrise de sa conduite.

Le procédé de démarrage pourrait également être utilisé pour démarrer le moteur thermique tout en maintenant le fonctionnement du ou des moteurs électriques, selon le troisième mode de fonctionnement du véhicule hybride qui utilise les deux types de moteur thermique et électrique.

## Revendications

1. Procédé de contrôle-commande de démarrage d'un moteur thermique (1) d'un véhicule hybride comprenant au moins un moteur électrique (2), présentant des étapes consistant à :
- lancer une pseudo-séquence de démarrage du moteur thermique (1) en utilisant une batterie de démarrage (4), **caractérisé en ce qu'**il présente des étapes consistant à :
- mesurer et enregistrer une évolution temporelle d'au moins un paramètre de la batterie de démarrage (4), comprenant une intensité de courant et une tension données aux bornes de ladite batterie de démarrage,
- détecter si l'évolution temporelle du ou desdits paramètres atteint ou non une valeur prédéterminée définissant un état de la batterie de démarrage (4) capacitaire ou non pour un démarrage du moteur thermique (1), pendant un intervalle de temps donné,
- si l'état capacitaire de la batterie de démarrage (4) est détecté, démarrer le moteur thermique (1) en utilisant la batterie de démarrage (4),
- si l'état capacitaire de la batterie de démarrage (4) n'est pas détecté, autoriser le fonctionnement du moteur électrique (2) pour le déplacement du véhicule hybride et prévenir le conducteur que l'état capacitaire de la batterie de démarrage (4) n'est pas détecté.

2. Procédé de contrôle-commande selon la revendication 1, dans lequel le lancement de la pseudo-séquence de démarrage est réalisé pendant le fonctionnement du moteur électrique (2) du véhicule hybride.

3. Procédé de contrôle-commande selon la revendication 1, dans lequel le lancement de la pseudo-séquence de démarrage est réalisé pendant l'arrêt du moteur électrique (2) du véhicule hybride.

4. Procédé de contrôle-commande selon l'une des revendications 1 à 3, dans lequel l'étape de détection de l'état capacitaire de la batterie de démarrage (4) est réalisée durant une durée inférieure à 300ms.

5. Procédé de contrôle-commande selon l'une des revendications 1 à 4, dans lequel l'état capacitaire de la batterie de démarrage (4) est défini par une augmentation de l'intensité de courant de plusieurs centaines d'ampères et une chute de tension en deçà d'un à plusieurs volts pendant une durée comprise entre 100ms et 200ms.

6. Procédé de contrôle-commande selon l'une des revendications 1 à 5, dans lequel l'état capacitaire de la batterie de démarrage (4) est défini par une atteinte de l'intensité de courant d'au moins 800A, une chute de tension de moins de 3,8V à partir de 12.8V pendant une durée inférieure à 200 millisecondes.

7. Dispositif de contrôle-commande de démarrage d'un moteur thermique (1) d'un véhicule hybride comprenant un moteur thermique (1), au moins un moteur électrique (2), un moyen de démarrage (3) du moteur thermique (1) tel qu'un démarreur, une batterie de démarrage (4), pilotés par une unité de contrôle électronique principale (6), l'unité de contrôle électronique principale (6) permet de :
- lancer une pseudo-séquence de démarrage du moteur thermique (1) par l'intermédiaire du moyen de démarrage (3) alimenté par la batterie de démarrage (4),
et est **caractérisée en ce que** elle permet de :
- mesurer et enregistrer une évolution temporelle d'au moins un paramètre de la batterie de démarrage (4), comprenant une intensité de courant et une tension données aux bornes de ladite batterie de démarrage,
- détecter si l'évolution temporelle du ou desdits paramètres atteint ou non une valeur prédéterminée définissant un état de la batterie de démarrage (4) capacitaire ou non pour un démarrage du moteur thermique (1), pendant un intervalle de temps donné,
- si l'état capacitaire de la batterie de démarrage (4) est détecté, démarrer le moteur thermique (1) en utilisant la batterie de démarrage (4),
- si l'état capacitaire de la batterie de démarrage (4) n'est pas détecté, autoriser le fonctionnement du moteur électrique (2) pour le déplacement du véhicule hybride et prévenir le conducteur que l'état capacitaire de la batterie de démarrage (4) n'est pas détecté.

8. Dispositif de contrôle-commande selon la revendication 7, comportant une boîte de vitesse robotisée (BVR) ou automatique (BVA), **caractérisé en ce que** l'unité de contrôle électronique principale (6) permet le démarrage du moteur thermique (1) suivi par un engagement de ladite boîte de vitesse si l'état capacitaire de la batterie de démarrage (4) n'est pas détecté et que le véhicule est déplacé par le moteur électrique (2).

9. Dispositif permettant le démarrage d'un moteur thermique (1) selon l'une des revendications 7 à 8, **caractérisé en ce que** la batterie de démarrage (4) est la batterie servitude 12V.

10. Dispositif permettant le démarrage d'un moteur thermique (1) selon l'une des revendications 7 à 9, **caractérisé en ce que** le dispositif comporte un moyen de signalisation (7) logé dans le véhicule, relié à l'unité de contrôle électronique principale (6) et avertissant le conducteur du mode de fonctionnement du véhicule.

## Patentansprüche

1. Verfahren zur Überwachung/Steuerung des Starts einer Brennkraftmaschine (1) eines Hybridfahrzeugs, das wenigstens einen Elektromotor (2) umfasst, folgende Schritte aufweisend:
- Einleiten einer Pseudo-Startsequenz der Brennkraftmaschine (1) unter Verwendung einer Starterbatterie (4),
**dadurch gekennzeichnet, dass** es folgende Schritte aufweist:
- Messen und Aufzeichnen einer zeitlichen Änderung wenigstens eines Parameters der Starterbatterie (4), welcher eine Stromstärke und eine Spannung umfasst, die an den Klemmen der Starterbatterie vorliegen,
- Erkennen, ob die zeitliche Änderung des Parameters oder der Parameter einen vorbestimmten Wert, der einen startfähigen oder nicht startfähigen Zustand der Starterbatterie (4) für ein Starten der Brennkraftmaschine (1) definiert, während eines gegebenen Zeitintervalls erreicht oder nicht,
- falls der startfähige Zustand der Starterbatterie (4) erkannt wird, Starten der Brennkraftmaschine (1) unter Verwendung der Starterbatterie (4),
- falls der startfähige Zustand der Starterbatterie (4) nicht erkannt wird, Erlauben des Betriebs des Elektromotors (2) für das Fahren des Hybridfahrzeugs und Benachrichtigen des Fahrers, dass der startfähige Zustand der Starterbatterie (4) nicht erkannt wird.

2. Verfahren zur Überwachung/Steuerung nach Anspruch 1, wobei das Einleiten der Pseudo-Startsequenz während des Betriebs des Elektromotors (2) des Hybridfahrzeugs durchgeführt wird.

3. Verfahren zur Überwachung/Steuerung nach Anspruch 1, wobei das Einleiten der Pseudo-Startsequenz während des Stillstands des Elektromotors (2) des Hybridfahrzeugs durchgeführt wird.

4. Verfahren zur Überwachung/Steuerung nach einem der Ansprüche 1 bis 3, wobei der Schritt der Erkennung des startfähigen Zustands der Starterbatterie (4) während einer Dauer von weniger als 300 ms durchgeführt wird.

5. Verfahren zur Überwachung/Steuerung nach einem der Ansprüche 1 bis 4, wobei der startfähige Zustand der Starterbatterie (4) durch eine Erhöhung der Stromstärke um mehrere Hundert Ampere und einen Spannungsabfall unterhalb von einem bis mehreren Volt während einer Dauer zwischen 100 ms und 200 ms definiert ist.

6. Verfahren zur Überwachung/Steuerung nach einem der Ansprüche 1 bis 5, wobei der startfähige Zustand der Starterbatterie (4) durch ein Erreichen der Stromstärke von wenigstens 800 A und einen Spannungsabfall von weniger als 3,8 V, ausgehend von 12,8 V, während einer Dauer von weniger als 200 Millisekunden definiert ist.

7. Vorrichtung zur Überwachung/Steuerung des Starts einer Brennkraftmaschine (1) eines Hybridfahrzeugs, welche eine Brennkraftmaschine (1), wenigstens einen Elektromotor (2), ein Mittel zum Starten (3) der Brennkraftmaschine (1) wie etwa einen Anlasser und eine Starterbatterie (4) umfasst, die von einer elektronischen Hauptsteuereinheit (6) gesteuert werden, wobei die elektronische Hauptsteuereinheit (6) ermöglicht:
- eine Pseudo-Startsequenz der Brennkraftmaschine (1) über das von der Starterbatterie (4) gespeiste Mittel zum Starten (3) einzuleiten,
und **dadurch gekennzeichnet ist, dass** sie ermöglicht:
- eine zeitliche Änderung wenigstens eines Parameters der Starterbatterie (4), welcher eine Stromstärke und eine Spannung umfasst, die an den Klemmen der Starterbatterie vorliegen, zu messen und aufzuzeichnen,
- zu erkennen, ob die zeitliche Änderung des Parameters oder der Parameter einen vorbestimmten Wert, der einen startfähigen oder nicht startfähigen Zustand der Starterbatterie (4) für ein Starten der Brennkraftmaschine (1) definiert, während eines gegebenen Zeitintervalls erreicht oder nicht,
- falls der startfähige Zustand der Starterbatterie (4) erkannt wird, die Brennkraftmaschine (1) unter Verwendung der Starterbatterie (4) zu starten,
- falls der startfähige Zustand der Starterbatterie (4) nicht erkannt wird, den Betrieb des Elektromotors (2) für das Fahren des Hybridfahrzeugs zu erlauben und den Fahrer zu benachrichtigen, dass der startfähige Zustand der Starterbatterie (4) nicht erkannt wird.

8. Vorrichtung zur Überwachung/Steuerung nach Anspruch 7, welche ein halbautomatisches Getriebe (Semi-Automatic Transmission, SAT) oder Automatikgetriebe (Automatic Transmission, AT) aufweist, **dadurch gekennzeichnet, dass** die elektronische Hauptsteuereinheit (6) das Starten der Brennkraftmaschine (1), gefolgt von einem Einkuppeln des Getriebes, ermöglicht, falls der startfähige Zustand der Starterbatterie (4) nicht erkannt wird, und dass das Fahrzeug von dem Elektromotor (2) bewegt wird.

9. Vorrichtung, welche das Starten einer Brennkraftmaschine (1) ermöglicht, nach einem der Ansprüche 7 bis 8, **dadurch gekennzeichnet, dass** die Starterbatterie (4) die 12V-Servicebatterie ist.

10. Vorrichtung, welche das Starten einer Brennkraftmaschine (1) ermöglicht, nach einem der Ansprüche 7 bis 9, **dadurch gekennzeichnet, dass** die Vorrichtung ein im Fahrzeug aufgenommenes Signalisierungsmittel (7) aufweist, das mit der elektronischen Hauptsteuereinheit (6) verbunden ist und den Fahrer über die Betriebsart des Fahrzeugs informiert.

## Claims

1. Monitoring/control method for starting a heat engine (1) of a hybrid vehicle comprising at least one electric motor (2), having steps involving:
- launching a pseudo-starting sequence for the heat engine (1) using a starter battery (4),
**characterised in that** it has steps involving:
- measuring and recording a time development of at least one parameter of the starter battery (4), comprising a given current intensity and voltage at the terminals of the starter battery,
- detecting whether the time development of the parameter(s) does or does not reach a predetermined value defining a state of the starter battery (4) which does or does not have the capacity to start the heat engine (1), during a given time period,
- if the capacity state of the starter battery (4) is detected, starting the heat engine (1) using the starter battery (4),
- if the capacity state of the starter battery (4) is not detected, authorising the operation of the electric motor (2) for moving the hybrid vehicle and warning the driver that the capacity state of the starter battery (4) is not detected.

2. Monitoring/control method according to Claim 1, wherein the launch of the pseudo-starting sequence is carried out during operation of the electric motor (2) of the hybrid vehicle.

3. Monitoring/control method according to Claim 1, wherein the launch of the pseudo-starting sequence is carried out while the electric motor (2) of the hybrid vehicle is stopped.

4. Monitoring/control method according to any one of Claims 1 to 3, wherein the step of detecting the capacity state of the starter battery (4) is carried out during a time period less than 300 ms.

5. Monitoring/control method according to any one of Claims 1 to 4, wherein the capacity state of the starter battery (4) is defined by an increase of the current intensity of several hundreds of amps and a decrease of voltage below from one to several Volt for a time period between 100 ms and 200 ms.

6. Monitoring/control method according to any one of Claims 1 to 5, wherein the capacity state of the starter battery (4) is defined by reaching the current intensity of at least 800 A, a decrease of voltage of less than 3.8 V from 12.8 V during a time period less than 200 milliseconds.

7. Monitoring/control device for starting a heat engine (1) of a hybrid vehicle comprising a heat engine (1), at least one electric motor (2), a starter means (3) for the heat engine (1), such as a starter, a starter battery (4), which are controlled by a main electronic control unit (6),
the main electronic control unit (6) allows:
- the launch of a pseudo-starting sequence for the heat engine (1) by way of the starting means (3) which is supplied by the starter battery (4),
and is **characterised in that** it allows:
- the measurement and recording of a time development of at least one parameter of the starter battery (4) comprising a given current intensity and voltage at the terminals of the starter battery,
- detection of whether the time development of the parameter(s) does or does not reach a predetermined value which defines a state of the starter battery (4) which does or does not have the capacity to start the heat engine (1), for a given period of time,
- if the capacity state of the starter battery (4) is detected, starting the heat engine (1) using the starter battery (4),
- if the capacity state of the starter battery (4) is not detected, authorising the operation of the electric motor (2) for moving the hybrid vehicle and warning the driver that the capacity state of the starter battery (4) is not detected.

8. Monitoring/control device according to Claim 7, comprising a robotised gearbox (RGB) or automatic gearbox (AGB), **characterised in that** the main electronic control unit (6) allows the heat engine (1) to be started, followed by an engagement of the gearbox if the capacity state of the starter battery (4) is not detected and if the vehicle is moved by the electric motor (2).

9. Device allowing the starting of a heat engine (1) according to either Claim 7 or Claim 8, **characterised in that** the starter battery (4) is the 12V service battery.

10. Device allowing the starting of a heat engine (1) according to any one of Claims 7 to 9, **characterised in that** the device comprises a signalling means (7) which is received in the vehicle and which is connected to the main electronic control unit (6) and which warns the driver of the operating mode of the vehicle.
